# EUROPÄISCHE PATENTSCHRIFT

(11) **EP 2 262 582 B1**
(45) Veröffentlichungstag und Bekanntmachung des Hinweises auf die Patenterteilung: **24.04.2013**
(21) Anmeldenummer: 08872976.9
(22) Anmeldetag: 28.11.2008
(51) Int. Cl.: B01J 4/00, B01J 19/18

(54) **RÜHRKESSELREAKTOR SOWIE VERFAHREN ZUR DURCHFÜHRUNG EINER POLYMERISATIONSREAKTION UNTER VERWENDUNG EINES SOLCHEN RÜHRKESSELREAKTORS**
STIRRED-TANK REACTOR AND METHOD FOR CARRYING OUT A POLYMERISATION REACTION USING SAID TYPE OF STIRRED-TANK REACTOR
RÉACTEUR AGITÉ ET PROCÉDÉ POUR CONDUIRE UNE RÉACTION DE POLYMÉRISATION AU MOYEN D'UN TEL RÉACTEUR AGITÉ

(30) Priorität: 28.02.2008 DE 102008000432
(43) Veröffentlichungstag der Anmeldung: 22.12.2010
(73) Patentinhaber: Evonik Röhm GmbH, 64293 Darmstadt (DE)
(72) Erfinder: CARLOFF, Rüdiger, 64291 Darmstadt (DE); HEID, Joachim, 64407 Fränkisch-Crumbach (DE); PICKENÄCKER, Olaf, 68623 Lampertheim (DE)
(86) Internationale Anmeldenummer: PCT/EP2008/066387
(87) Internationale Veröffentlichungsnummer: WO 2009/106173

(56) Entgegenhaltungen:
- US-A- 4 985 208

## Beschreibung

### Gebiet der Erfindung

Die Erfindung betrifft einen kontinuierlich betriebenen Rührkesselreaktor, insbesondere zur Herstellung von Polymeren aus ungesättigten Monomeren, mit einem vorzugsweise temperierbaren Reaktormantel, wenigstens einer angetriebenen Rührwelle und drehfest mit der Rührwelle verbundenen Rühr- und/oder Scherelementen, mit wenigstens einem vorzugsweise in Gebrauchslage oberen Edukteintrag und wenigstens einem vorzugsweise in Gebrauchslage unteren Produktaustrag. Die Erfindung betrifft weiterhin ein Verfahren zur Durchführung einer Polymerisationsreaktion aus ungesättigten Monomeren unter Verwendung eines Rührkesselreaktors der zuvor beschriebenen Art.

### Stand der Technik

Ein Rührkesselreaktor der vorstehend genannten Art zur Durchführung von Polymerisationsreaktionen in hochviskosen Reaktionsmedien und bei hohen Reaktionsgeschwindigkeiten ist beispielsweise aus der DD 294 426 A5 bekannt. Der dort beschriebene Rührkesselreaktor besitzt einen temperierbaren Reaktormantel und einen zentralsymmetrisch in dem Reaktor angeordneten Rotor. Der Rotor umfasst eine Rotorwelle, ein Joch mit Durchtrittsöffnungen und einen Rührzylinder, welcher oben und unten offen ist und sich in Achsrichtung der Rotorwelle vom Reaktorboden bis zum Reaktordeckel erstreckt. Der Ringraum zwischen dem Rührzylinder und dem Reaktormantel und der Ringraum zwischen dem Rührzylinder und dem Einsteckrohr ist mit Rührwendeln versehen. Der Rührzylinder besitzt ein Joch mit Durchtrittsöffnungen. Zwischen den Durchtrittsöffnungen auf und unter dem Joch sind die Mischelemente angeordnet. Durch die besondere Anordnung der Durchtrittsöffnungen auf dem Joch des Rührzylinders bzw. der Mischelemente sollen die Durchmischung und Homogenität der Reaktionsmasse sowie die Wärmeabfuhr verbessert werden.

Insbesondere durch die Ausbildung der Mischelemente als Rührwendeln wird eine Förderung des Produktstroms erzielt.

Der Rührkesselreaktor gemäß DD 294 426 A5 ist so gestaltet, dass der Reaktor nur vollständig gefüllt betrieben werden kann. Die Mischelemente müssen so angeordnet werden, dass Ablagerungen am Reaktordeckel vermieden werden. Darüber hinaus müssen die Mischelemente konstruktiv so gestaltet sein, dass eine wirksame Beförderung des Produktstroms erzielt werden kann.

Insbesondere eine Teilfüllung bei kontinuierlich betriebenen Reaktoren hat den Nachteil, dass Polymerablagerungen im gasgefüllten, oberen Behälterbereich auftreten können. Bei teilgefüllten kontinuierlich betriebenen Reaktoren werden typischerweise Austragspumpen benötigt, die insbesondere bei hohen Ausstößen von mehreren 1.000 kg/h viskoser Flüssigkeit in ihrer Größe recht teuer sind. Beim An- und Abfahren des Reaktors muß gewöhnlich Reaktorinhalt mit im Vergleich zum stationären Betrieb sehr unterschiedlicher Viskosität ausgetragen werden. Die Austragspumpe kann dabei insbesondere bei niedrigen Viskositäten aufgrund fehlender Schmierung recht schnell verschleißen.

Bekannte kontinuierlich betriebene Rührkesselreaktoren werden häufig nur mit einer Teilfüllung betrieben. Für einen solchen Betrieb eines Rührkesselreaktors sind Füllstandsmessgeräte erforderlich. Diese sind aufgrund der Bildung von Polymerablagerungen wiederum verhältnismäßig störanfällig.

Patentschrift DE 3 338 736 A1 beschreibt ein Polymerisationsverfahren, bei dem voll gefüllte Rührkesselreaktoren eingesetzt werden. So werden zwar Anbackungen an den oberen Reaktorwänden sowie die schlechte Einmischung des zurückfließenden Monomerkondensats vermieden. Jedoch wird nicht direkt unterhalb der Gleitringdichtung zudosiert, so dass es dort zu Polymeranhaftungen kommen kann, die letztendlich zu einem Versagen des Rührwerks führen können. Da nur mit geringem Überdruck gefahren wird, werden zudem am Reaktorboden teure und wartungsintensive Zahnradpumpen eingesetzt, die insbesondere bei kleinen Viskositäten hohen Verschleiß aufweisen und ausfallen können. Weiterhin weist das Rührwerk kein Fußlager auf, so dass die Welle stärker ausgeführt werden muss und das Rührwerk empfindlich gegenüber Unwuchten durch Polymeranhaftungen ist.

In Patent EP 1 122 265 B1 wird ein Polymerisationsreaktor beschrieben, der mehrere Einlässe für Edukte aufweist. Jedoch wird keiner der Zuführungen für eine Spülung des Gleitringdichtungsbereiches eingesetzt, so dass die beschriebenen Nachteile auftreten können.

Das Patent RU 2114869 C1 beschreibt ein kontinuierliches Masse-Polymerisationsverfahren, in dem voll gefüllte Rührkesselreaktoren verwendet werden. Jedoch wird auch hier nicht in Nähe der Gleitringdichtung zudosiert und kein Fußlager verwendet, wodurch ebenfalls die oben aufgeführten Beeinträchtigungen zu erwarten sind. Zurückgeführte, gekühlte Polymer-Lösung wird an einer zweiten Dosierstelle in den Reaktor zugeführt, ohne dass Initiator zugemischt wird. Dadurch wird folglich keine wesentlich verbesserte Homogenität der Initiatorkonzentration im Reaktor erzeugt.

### Aufgabe

Der Erfindung liegt daher die Aufgabe zugrunde, einen einfach gestalteten Rührkesselreaktor der eingangs genannten Art bereitzustellen, der mit einfachen Mitteln kontinuierlich und vollständig befüllt betreibbar ist. Insbesondere soll der Reaktor so einfach ausgebildet sein, dass auf teure Siruppumpen für hochviskose Flüssigkeiten und auf eine Füllstandsregelung verzichtet werden kann.

Weiterhin sollen die zugeführten Edukte möglichst schnell in die viskose Reaktionsmischung im Reaktor eingemischt und homogen verteilt werden.

### Lösung

Die Aufgabe wird erfindungsgemäß gelöst durch einen kontinuierlich betriebenen Rührkesselreaktor mit den Merkmalen des Anspruchs 1.

Auf diese Art und Weise kann der Rührkesselreaktor gemäß der Erfindung vollständig gefüllt und unter Überdruck betrieben werden. Der Druck im Reaktor wird durch die Förderorgane der Edukte aufgebracht, die aufgrund ihrer Fördereigenschaften dafür sorgen, dass Produkt aus dem Reaktor in die Austragsleitung fließt. Auf Austragspumpen für das Produktgemisch kann daher verzichtet werden.

Bei einer zweckmäßigen Variante des Rührkesselreaktors gemäß der Erfindung ist vorgesehen, dass wenigstens ein Edukteintrag unmittelbar im Bereich eines in Gebrauchslage oberen Rührwelleneintritts in den Reaktionsraum vorgesehen ist. Beispielsweise kann ein Edukteintrag unmittelbar unterhalb einer oberen Wellendichtung der Rührwelle vorgesehen sein.

Bei hydrodynamisch gefüllten Reaktoren wird dadurch vermieden, dass Reaktionsprodukt in die Wellenabdichtung gelangen kann. Der untere Teil der oberen Wellenabdichtung wird durch den Eduktstrom kontinuierlich frei gespült. Unter hydrodynamisch gefüllten Reaktoren versteht man Reaktoren, die vollständig mit Flüssigkeit, ohne Gasphase, gefüllt sind.

Bei einer bevorzugten Variante ist vorgesehen, dass die Rührwelle an ihrem in Gebrauchslage unteren Ende einen Teil des Bodenauslasses bildet.

Beispielsweise kann die Rührwelle zumindest an ihrem den Bodenauslauf durchsetzenden Ende als Hohlwelle ausgebildet sein, die mit dem Reaktionsraum kommuniziert.

Besonders vorteilhaft ist es, wenn der Bodenauslauf als Fußlager für die Rührwelle ausgebildet ist.

Das Fußlager der Rührwelle kann auch in einer weiteren Ausführungsform durch einen Lagerbock in einer gewissen Höhe über dem Bodenauslauf angeordnet sein.

Die Vorteile des zusätzlichen Fußlagers, wie unten dargestellt, bleiben erhalten.

Das zweckmäßigerweise als Gleitlager ausgebildete Fußlager kann dabei von dem Reaktionsgemisch gekühlt und geschmiert werden.

Bei einer zweckmäßigen Ausgestaltung des Rührkesselreaktors nach der Erfindung kann vorgesehen sein, dass der Lagerspalt des Fußlagers so bemessen ist, dass dieser von dem Reaktionsgemisch durchströmbar ist.

Besonders vorteilhaft ist es, wenn das den Bodenauslauf durchsetzende Ende der Rührwelle als umfänglich zumindest teilweise abgeflachter Lagerzapfen ausgebildet ist. So wird das gesamte Fußlager einschließlich Lagerspalt zwangsläufig von dem Reaktionsgemisch durchströmt.

Dadurch, dass die Rührwelle zusätzlich ein Fußlager aufweist, ist es möglich, den Durchmesser der Welle kleiner zu dimensionieren, als dies bei Rührwellen erforderlich wäre, die nur in einem in Gebrauchslage oberen Lager geführt werden. Das Fußlager dient dazu, unzulässig große Auslenkungen der Welle zu vermeiden, beispielsweise bei in die Welle eingeleiteten Unwuchten aufgrund von Polymerisationsablagerungen im Reaktor.

Bei einer vorteilhaften Variante des Rührkesselreaktors gemäß der Erfindung ist vorgesehen, dass die Rührwelle wenigstens einen in den Reaktionsraum mündenden, sich zumindest teilweise quer zu deren Längsachse erstreckenden Ablaufkanal aufweist. Die an wenigstens ihrem unteren Ende als Hohlwelle ausgebildete Rührwelle kann beispielsweise oberhalb des Fußlagers einfach mit einer Querbohrung versehen sein.

Die zuvor erwähnte Aufgabe wird weiterhin gelöst durch ein Verfahren zur Durchführung einer Polymerisationsreaktion aus ungesättigten Monomeren unter Verwendung eines vorstehend beschriebenen Rührkesselreaktors, wobei sich das Verfahren insbesondere dadurch auszeichnet, dass die Zufuhr der Edukte und der Austrag der Produkte in den und aus dem Reaktor kontinuierlich erfolgen.

Vorzugsweise wird die Polymerisation unter Überdruck durchgeführt.

Als Überdruck kann beispielsweise ein Überdruck von mehr als 5 bar gegenüber dem Atmosphärendruck eingestellt werden.

Der Reaktor wird zweckmäßigerweise hydrodynamisch gefüllt betrieben, d. h. dass der Austrag des Produkts aus dem vollständig gefüllten Reaktor ausschließlich durch den Druck der eingebrachten Edukte bewerkstelligt wird.

Vorteilhaft ist es, wenn neben der Eduktdosierung unmittelbar unterhalb der oberen Wellenabdichtung ein weiterer Eduktstrom zugeführt wird. Besonders vorteilhaft ist es, wenn die weiteren Eduktströme über wenigstens eine Dosierlanze in einen zentralen Bereich des Reaktors eingebracht werden. Hierdurch werden zuverlässig schlecht durchmischte Stellen, in denen beispielsweise die Initiatorkonzentration besonders niedrig ist, vermieden. So lässt sich mittels einer Dosierlanze eine gleichmäßige Verteilung der Edukte im Reaktor erzielen. Das ist insbesondere für schnell zerfallende Initiatoren für die Polymerisation wichtig. Schnell zerfallend bedeutet in diesem Fall, dass die Initiatoren Halbwertzeiten im Bereich der Mischzeiten des Rührers besitzen. Das heißt ca. 1 - 200sec. Beim Einbringen einer Teilmenge der Initiatoren wird die Segregation hinsichtlich der Initiatorkonzentration im Reaktor minimiert.

Durch den hydrodynamischen Betrieb des Reaktors gemäß der Erfindung sind insbesondere keine aufwändigen Einbauten zum Transport des Reaktionsgemischs erforderlich, die dem Einsatz von Dosierlanzen im Wege stünden.

Besonders zweckmäßig ist es, wenn die Dosierung der Edukte an wenigstens zwei räumlich voneinander getrennten Stellen des Reaktors erfolgt. Durch die Aufteilung des Dosierstroms auf mehrere Dosierstellen ist eine bessere Ausnutzung des Reaktionsvolumens möglich.

In kontinuierlich betriebenen Rührkesselreaktionen für die Polymerisation ist es im Allgemeinen nicht möglich, das gesamte Reaktorvolumen zu gleichen Teilen homogen als Reaktionsraum auszunutzen. Je größer die Viskositätsunterschiede zwischen Reaktordosierung und Reaktorinhalt sind, desto größer ist die Neigung zur Segregation. In der Regel treten schlecht durchmischte Stellen an verschieden Stellen im Reaktor auf, in der Nähe der Reaktorwand oder innerhalb der Reaktionsmischung. Durch weitere Dosierstellen wird das effektiv zur Verfügung stehende Reaktionsvolumen erhöht und die Mischwege werden kurz gehalten. Dieser Effekt ist dann besonders ausgeprägt, wenn die Zeitkonstanten der Reaktion in der Größenordnung der Mischzeit des Rührers liegen. In diesem Fall können die Reaktanden besser über den Reaktionsraum verteilt werden, bevor sie reagieren.

Ein Teil der Edukte kann bereits vor Eintritt in den Reaktionsraum miteinander vermischt werden. Beispielsweise kann der den Prozess zugeführte Initiator in Reinform oder als verdünnte Lösung vor dem Reaktor in die Monomerdosierleitung des Reaktors eingegeben werden. Auf der Strecke zum Reaktor wird der Initiator in der Monomerleitung vermischt. Die Dosierstelle des Initiators liegt zweckmäßigerweise soweit von dem Reaktor entfernt, dass sich eine homogene Initiator-Monomermischung ausbilden kann.

Um das Einmischen des Initiators zu verbessern, können statische Mischer in die Monomerdosierleitung eingebaut werden.

Ein Vorteil dieser Verfahrensweise ist es, dass die Konzentrationsgradienten der Edukte im Reaktor möglichst gering sind.

Vorzugsweise wird die Manteltemperatur des Reaktors so eingestellt, dass diese wenigstens 10° C über der Glastemperatur des Polymeren in der Reaktionslösung liegt. Hierdurch wird die Neigung zur Bildung von Polymerablagerungen an kalten Reaktorwänden reduziert.

### Figurenbeschreibung

Ein Ausführungsbeispiel des Rührkesselreaktors gemäß der Erfindung wird nachstehend anhand der beigefügten Zeichnungen erläutert.

Es zeigen:
Figur 1: eine schematische Ansicht eines Rührkesselreaktors gemäß der Erfindung,
Figur 2: ein Schnitt durch das Fußlager des Rührkesselreaktors gemäß der Erfindung.

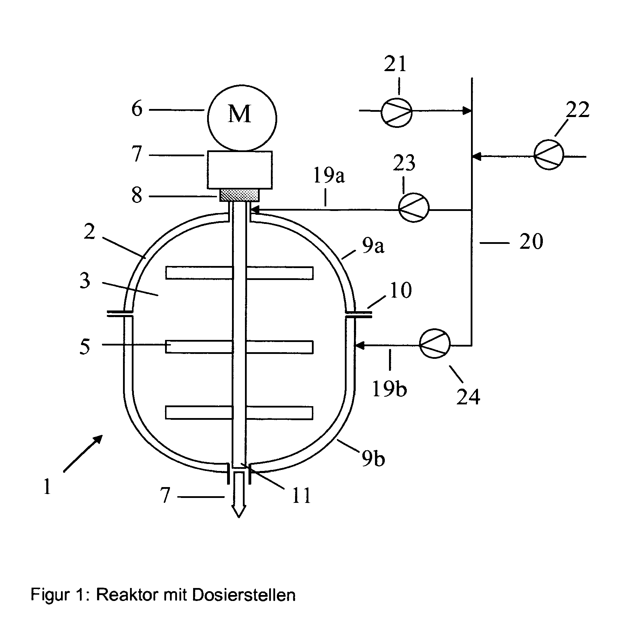

Der in Figur 1 dargestellte Rührkesselreaktor 1 umfasst einen vorzugsweise zweiteiligen Reaktormantel 2, der einen Reaktionsraum 3 umschließt. Der Reaktionsraum 3 ist von einer Rührwelle 4 durchsetzt, die drehfest mit Misch- und Scherelementen 5 versehen ist. Die Misch- und Scherelemente 5 können in an sich bekannter Art und Weise als Stangen, Wendel oder Paddel ausgebildet sein.

Die Rührwelle 4 kann direkt oder indirekt angetrieben sein, bei dem beschriebenen Ausführungsbeispiel ist die Rührwelle direkt mittels eines Motors 6 unter Zwischenschaltung eines Getriebes 7 angetrieben. Unterhalb des Getriebes 7 ist die Rührwelle 4 über eine Gleitringdichtung 8 gegen den Reaktionsraum 3 abgedichtet. Der Reaktormantel 2 ist bei dem beschriebenen Ausführungsbeispiel aus zwei jeweils doppelwandigen Schalen 9a und 9b zusammengesetzt, die über einen umlaufenden Flansch 10 dichtend gegeneinander verspannt sind.

Bei Betrieb des Rührkesselreaktors 1 ist der Reaktormantel 9a, b von einem Wärmetauschermedium durchströmt, über welches die Temperierung des Reaktionsraums 3 erzielt wird. Dies kann ein Heiz- oder Kühlmittel sein, beispielsweise ein temperiertes Fluid wie Dampf, Wasser, Wärmeträgeröl oder ein anderes Wärmeträgermedium.

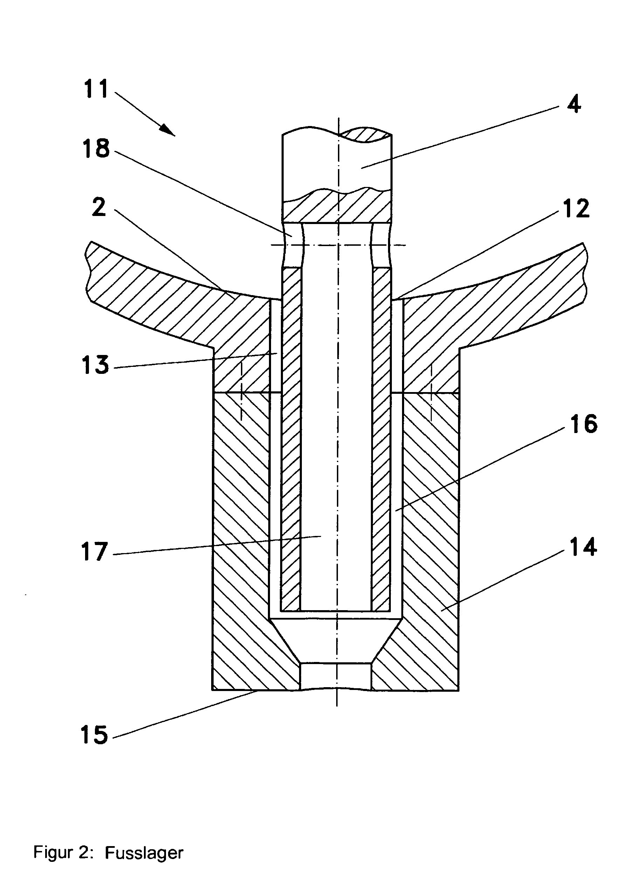

Die Rührwelle 4 ist an ihrem von dem Motor 6 abliegenden Ende in einem Fußlager 11 geführt, welches gleichzeitig einen zentralen Bodenauslauf des Rührkesselreaktors 1 bildet. Die Ausbildung des Fußlagers 11 und der Rührwelle 4 im Bereich des Fußlagers 11 ist in Figur 2 dargestellt.

Im Folgenden wird zunächst Bezug genommen auf Figur 2..

Das den Lagerzapfen der Rührwelle 4 bildende Ende durchsetzt eine den zentralen Bodenauslauf des Rührkesselreaktors 1 bildende Öffnung 12 in dem Reaktormantel 2. Die Öffnung 12 dient gleichzeitig als Polymeraustrag, wie nachstehend noch beschrieben wird. Unterhalb dieses Austrittsspalts 13 ist eine Gleitbuchse 14 vorgesehen, die die Rührwelle 4 so aufnimmt, dass ein Lagerspalt 16 mit üblicher Maßtoleranz entsteht. Der Durchmesser der Öffnung des zentralen Produktauslaufes und der Gleitbuchse 14 können daher gleich oder unterschiedlich sein.

Das austragsseitige Ende 15 der Gleitbuchse 14 ist als Flüssigkeitsauslauf ausgestaltet und an eine Produktaustragsleitung (nicht gezeigt) angeschlossen.

Das in der Gleitbuchse 14 zum Teil geführte Ende der Rührwelle 4 kann einen konstanten Durchmesser besitzen oder innerhalb der Gleitbuchse 14 im Durchmesser variieren. Auch eine Veränderung des Durchmessers der Gleitbuchse 14 in axialer Richtung ist denkbar. Eine weitere Möglichkeit besteht darin, das Ende der Rührwelle 4 innerhalb der Gleitbuchse als Lagerzapfen auszubilden, bei dem die Rührwelle umfänglich mit einem oder mehreren Abflachungen versehen ist.

Der Lagerspalt 16 der Rührwelle ermöglicht in der Gleitbuchse die Schmierung und Spülung des Lagerspaltes mittels des auszutragenden Reaktionsproduktes.

Die Rührwelle 4 ist in dem das Fußlager 11 durchsetzenden Bereich mit einer Axialbohrung 17 versehen, welche über eine Querbohrung 18 mit dem Reaktionsraum 3 kommuniziert. Die Reaktionsmischung wird über die Querbohrung 18 und die Axialbohrung 17 innerhalb des Wellenendes geführt und strömt stirnseitig aus der Rührwelle 4 direkt in eine an einem Auslaufstutzen angeschlossene Rohrleitung. Die Querbohrung 17 bzw. Querbohrungen befinden sich unmittelbar oberhalb des Fußlagers 11 bzw. oberhalb des Austrittsspalts 13.

Im Folgenden wird nochmals auf Figur 1 Bezug genommen. In den Rührkesselreaktor 1 werden die Edukte über zwei Dosierstellen 19a, 19b in den Reaktionsraum 3 eingebracht. Eine erste Dosierstelle 19a befindet sich unmittelbar unterhalb der Gleitringdichtung 8. Eine zweite Dosierstelle 19b mündet stromabwärts der ersten Dosierstelle 19a zentral im Reaktionsraum 3. Die zweite Dosierstelle 19b kann in Form einer nicht dargestellten Dosierlanze vorgesehen sein.

Über die Leitung 20 werden Monomer und/oder Lösungsmittel dem Rührkesselreaktor 1 zugeführt. Über eine erste Dosierpumpe 21 wird den Monomeren ein Kettenlängenregler zugegeben, über eine stromabwärts angeordnete zweite Dosierpumpe 22 werden die die Polymerisation startenden Initiatoren zudosiert.

Stromabwärts der Initiatordosierung wird der Eduktstrom verzweigt. Über dritte und vierte Dosierpumpen 23 und 24 erfolgt die Einspeisung in den Reaktionsraum 3.

Es ist auch denkbar auf eine oder beide Dosierpumpen 23 und 24 zu verzichten und die Aufteilung des Dosierstromes in den Reaktor über Ventile und/oder entsprechend ausgeführte Leitungsquerschnitte einzustellen. Nachteilig bei dieser Variante ist allerdings, dass geringe Ablagerungen in den Rohrleitungen oder Ventilen zu Abweichungen des gewünschten Verhältnisses der Teilströme in den Reaktor führt. Eine weitere Möglichkeit ist die Eduktströme 19a und/oder 19b über Durchflußmesser zu überwachen und über Regelventile zu regeln.

### Bezugszeichen

- 1: Rührkesselreaktor
- 2: Reaktormantel
- 3: Reaktionsraum
- 4: Rührwelle
- 5: Misch- und Scherelmente
- 6: Motor
- 7: Getriebe
- 8: Gleitringdichtung
- 9a, b: Schalen
- 10: Flansch
- 11: Fußlager
- 12: Öffnung
- 13: Austrittsspalt
- 14: Gleitbuchse
- 15: Ende der Gleitbuchs
- 16: Lagerspalt
- 17: Axialbohrung
- 18: Querbohrung
- 19a: erste Dosierstelle
- 19b: zweite Dosierstelle
- 20: Leitung
- 21: erste Dosierpumpe
- 22: zweite Dosierpumpe
- 23: dritte Dosierpumpe
- 24: vierte Dosierpumpe

## Patentansprüche

1. Rührkesselreaktor (1), insbesondere zur Herstellung von Polymeren aus ungesättigten Monomeren, mit einem vorzugsweise temperierbaren Reaktormantel (2), wenigstens einer angetriebenen Rührwelle (4) und drehfest mit der Rührwelle (4) verbundenen Rühr- und/oder Scherelementen, mit wenigstens einem in Gebrauchslage oberen Edukteintrag und wenigstens einem in Gebrauchslage unteren Produktaustrag, **dadurch** g**ekennnzeichnet**, **dass** der Produktaustrag als zentraler Bodenauslauf gestaltet ist, der zumindest teilweise von der Rührwelle (4) durchsetzt ist und dass der Rührkesselreaktor (1) eine Gleitbuchse (14) umfasst, die mit der Rührwelle einen Lagerspalt (16) ausbildet, in dem die Rührwelle durch das Reaktionsprodukt geschmiert und gespült wird.

2. Rührkesselreaktor nach Anspruch 1, **dadurch** g**ekennnzeichnet**, **dass** wenigstens ein Edukteintrag unmittelbar im Bereich eines in Gebrauchslage oberen Rührwelleneintritfs in den Reaktionsraum (3) vorgesehen ist und / oder **dass** die Rührwelle (4) an ihrem in Gebrauchslage unteren Ende einen Teil des Bodenauslaufs bildet.

3. Rührkesselreaktor nach einem der Ansprüche 1 oder 2, **dadurch** g**ekennnzeichnet**, **dass** die Rührwelle (4) zumindest an ihrem den Bodenauslauf durchsetzenden Ende als Hohlwelle ausgebildet ist, die mit dem Reaktionsraum (3) kommuniziert.

4. Rührkesselreaktor nach einem der Ansprüche 1 bis 3, **dadurch** g**ekennnzeichnet**, **dass** der Bodenauslauf als Fußlager (11) für die Rührwelle (4) ausgebildet ist.

5. Rührkesselreaktor nach Anspruch 4, **dadurch** g**ekennnzeichnet**, **dass** der Lagerspalt des Fußlagers (11) so bemessen ist, dass dieser von dem Reaktionsgemisch durchströmbar ist.

6. Rührkesselreaktor nach einem der Ansprüche 1 bis 5, **dadurch** g**ekennnzeichnet**, **dass** das den Bodenauslauf durchsetzende Ende der Rührwelle (4) als umfänglich zumindest teilweise abgeflachter Lagerzapfen ausgebildet ist.

7. Rührkesselreaktor nach einem der Ansprüche 1 bis 6, **dadurch** g**ekennnzeichnet**, **dass** die Rührwelle (4) wenigstens einen in den Reaktionsraum mündenden, sich zumindest teilweise quer zu deren Längsachse erstreckenden Ablaufkanal aufweist.

8. Verfahren zur Durchführung einer Polymerisationsreaktion aus ungesättigten Monomeren unter Verwendung eines Rührkesselreaktors nach einem der Ansprüche1 bis 7, **dadurch** g**ekennnzeichnet**, **dass** die Zufuhr der Edukte und der Austrag der Produkte in den und aus dem Reaktor kontinuierlich erfolgen.

9. verfahren nach Anspruch 8, **dadurch** g**ekennnzeichnet**, **dass** die Polymerisation unter Überdruck durchgeführt wird.

10. VerfahrennachAnspruch 9, **dadurch gekennnzeichnet, dass** ein Überdruck gegenüber Atmosphärendruck von ≥ 5 bar eingestellt wird.

11. Verfahren nach einem der Ansprüche 9 oder 10, **dadurch** g**ekennnzeichnet**, **dass** der Reaktor hydrodynamisch gefüllt betrieben wird.

12. Verfahren nach einem der Ansprüche 9 bis 11, **dadurch gekennnzeichnet**,
**dass** die Dosierung der Gemische der Edukte an wenigstens zwei räumlich voneinander getrennten Stellen des Reaktors erfolgt
und/oder
**dass** wenigstens ein Edukt über wenigstens eine Dosierlanze in einen zentralen Bereich des Reaktors eingebracht wird.

13. Verfahren nach einem der Ansprüche 9 bis 12, **dadurch** g**ekennnzeichnet**, **dass** die Durchströmung des Reaktors in Gebrauchslage in Gewichtskraftrichtung der Edukte und Produkte erfolgt.

14. Verfahren nach einem der Ansprüche 9 bis 13, **dadurch** g**ekennnzeichnet**, **dass** wenigstens ein Teil der Edukte bereits vor Eintritt in den Reaktionsraum miteinander vermischt wird.

15. Verfahren nach einem der Ansprüche 9 bis 14, **dadurch** g**ekennnzeichnet**, **dass** die Manteltemperatur des Reaktors so eingestellt wird, dass diese wenigstens 5° C über der Glastemperatur des Polymeren der Reaktionslösung liegt.

## Claims

1. Stirred-tank reactor (1), in particular for the preparation of polymers from unsaturated monomers, comprising a preferably thermostatable reactor jacket (2), at least one driven stirrer shaft (4) and stirring and/or shearing elements nonrotatably connected to the stirrer shaft (4), comprising at least one starting material feed which is at the top in the position of use and at least one product discharge which is at the bottom in the position of use, **characterized in that** the product discharge is in the form of a central bottom outflow through which the stirrer shaft (4) at least partly passes and **in that** the stirred-tank reactor (1) comprises a sliding bush (14) which, with the stirrer shaft, forms a bearing gap (16) in which the stirrer shaft is lubricated and flushed by the reaction product.

2. Stirred-tank reactor according to Claim 1, **characterized in that** at least one starting material feed into the reaction space (3) is provided directly in the region of a stirrer shaft entry which is at the top in the position of use and/or **in that** the stirrer shaft (4) forms a part of the bottom outflow at its end which is at the bottom in the position of use.

3. Stirred-tank reactor according to either of Claims 1 and 2, **characterized in that** the stirrer shaft (4) is formed, at least at its end which passes through the bottom outflow, as a hollow shaft which communicates with the reaction space (3).

4. Stirred-tank reactor according to any of Claims 1 to 3, **characterized in that** the bottom outflow is in the form of a step bearing (11) for the stirrer shaft (4).

5. Stirred-tank reactor according to Claim 4, **characterized in that** the bearing gap of the step bearing (11) is dimensioned so that the reaction mixture can flow through it.

6. Stirred-tank reactor according to any of Claims 1 to 5, **characterized in that** that end of the stirrer shaft (4) which passes through the bottom outflow has a contour in the form of at least partly flattened bearing journals.

7. Stirred-tank reactor according to any of Claims 1 to 6, **characterized in that** the stirrer shaft (4) has at least one outflow channel opening into the reaction space and extending at least partly transversely to the longitudinal axis thereof.

8. Process for carrying out a polymerisation reaction from unsaturated monomers using a stirred-tank reactor according to any of Claims 1 to 7, **characterized in that** the feed of the starting materials and the discharge of the products are effected into and out of the reactor.

9. Process according to Claim 8, **characterized in that** the polymerisation is carried out under superatmospheric pressure.

10. Process according to Claim 9, **characterized in that** a superatmospheric pressure, relative to atmospheric pressure, of greater than ≥ 5 bar is established.

11. Process according to either of Claims 9 and 10, **characterized in that** the reactor is operated with hydrodynamic filling.

12. Process according to any of Claims 9 to 11, **characterized in that** the metering of the mixtures of the starting materials is effected at at least two points of the reactor which are spatially separated from one another and/or **in that** at least one starting material is introduced via at least one metering lance into a central region of the reactor.

13. Process according to any of Claims 9 to 12, **characterized in that** the flow through the reactor in the position of use takes place in the direction of gravitational force on the starting materials and products.

14. Process according to any of Claims 9 to 13, **characterized in that** at least a part of the starting materials is mixed together even before entering into the reaction space.

15. Process according to any of Claims 9 to 14, **characterized in that** the jacket temperature of the reactor is adjusted so that it is at least 5°C above the glass transition temperature of the polymer of the reaction solution.

## Revendications

1. Réacteur agité (1), notamment pour la préparation de polymères à partir de monomères insaturés, comprenant une enveloppe de réacteur de préférence conditionnable (2), au moins un arbre d'agitation entraîné (4) et des éléments d'agitation et/ou de cisaillement accouplés solidaires en rotation à l'arbre d'agitation (4), comprenant au moins une entrée de réactif supérieure en position d'usage et au moins une sortie de produit inférieure en position d'usage, **caractérisé en ce que** la sortie de produit est configurée sous la forme d'une sortie de fond centrale qui est traversée au moins en partie par l'arbre d'agitation (4) et **en ce que** le réacteur agité (1) comprend une bague flottante (14) qui forme avec l'arbre d'agitation un jeu de palier (16) dans lequel l'arbre d'agitation est lubrifié et rincé par le produit de réaction.

2. Réacteur agité selon la revendication 1, **caractérisé en ce qu'**au moins une entrée de réactif est prévue directement dans la zone d'une entrée supérieure de l'arbre d'agitation en position d'usage dans la chambre de réaction (3) et/ou **en ce que** l'arbre d'agitation (4) forme une partie de la sortie de fond à son extrémité inférieure en position d'usage.

3. Réacteur agité selon l'une quelconque des revendications 1 ou 2, **caractérisé en ce que** l'arbre d'agitation (4) est configuré sous la forme d'un arbre creux qui communique avec la chambre de réaction (3) au moins à son extrémité traversant la sortie de fond.

4. Réacteur agité selon l'une quelconque des revendications 1 à 3, **caractérisé en ce que** la sortie de fond est configurée sous la forme d'une crapaudine (11) pour l'arbre d'agitation (4).

5. Réacteur agité selon la revendication 4, **caractérisé en ce que** le jeu de palier de la crapaudine (11) est dimensionné de manière à ce que celui-ci puisse être traversé par le mélange réactionnel.

6. Réacteur agité selon l'une quelconque des revendications 1 à 5, **caractérisé en ce que** l'extrémité traversant la sortie de fond de l'arbre d'agitation (4) est configurée sous la forme d'un tourillon au moins en partie aplati en périphérie.

7. Réacteur agité selon l'une quelconque des revendications 1 à 6, **caractérisé en ce que** l'arbre d'agitation (4) comprend au moins un canal de sortie débouchant dans la chambre de réaction, qui s'étend au moins en partie perpendiculairement à son axe longitudinal.

8. Procédé de réalisation d'une réaction de polymérisation à partir de monomères insaturés, utilisant un réacteur agité selon l'une quelconque des revendications 1 à 7, **caractérisé en ce que** l'introduction des réactifs dans le réacteur et le déchargement des produits du réacteur ont lieu en continu.

9. Procédé selon la revendication 8, **caractérisé en ce que** la polymérisation est réalisée sous une surpression.

10. Procédé selon la revendication 9, **caractérisé en ce qu'**une surpression par rapport à la pression atmosphérique ≥ 5 bar est ajustée.

11. Procédé selon l'une quelconque des revendications 9 ou 10, **caractérisé en ce que** le réacteur est exploité à un état rempli hydrodynamiquement.

12. Procédé selon l'une quelconque des revendications 9 à 11, **caractérisé en ce que** le dosage des mélanges des réactifs a lieu à au moins deux emplacements du réacteur séparés l'un de l'autre dans l'espace
et/ou
**en ce qu'**au moins un réactif est introduit par au moins une lance de dosage dans une zone centrale du réacteur.

13. P r o cédé selon l'une quelconque des revendications 9 à 12, **caractérisé en ce que** l'écoulement dans le réacteur en position d'usage a lieu dans la direction de la force de pesanteur des réactifs et des produits.

14. Procédé selon l'une quelconque des revendications 9 à 13, **caractérisé en ce qu'**au moins une partie des réactifs sont déjà mélangés les uns avec les autres avant l'entrée dans la chambre de réaction.

15. Procédé selon l'une quelconque des revendications 9 à 14, **caractérisé en ce que** la température d'enveloppe du réacteur est ajustée de manière à ce que celle-ci se situe au moins 5 °C au-dessus de la température de transition vitreuse du polymère de la solution réactionnelle.
